# EUROPEAN PATENT SPECIFICATION

(11) **EP 1 547 261 B1**
(45) Date of publication and mention of the grant of the patent: **30.04.2008**
(21) Application number: 03777533.5
(22) Date of filing: 24.09.2003
(51) Int. Cl.: H04B 1/40, H04B 1/38, H04M 1/00, H03K 9/00, H04L 27/06

(54) **PROGRAMMABLE RADIO INTERFACE**
PROGRAMMIERBARE FUNKSCHNITTSTELLE
INTERFACE RADIO PROGRAMMABLE

(30) Priority: 25.09.2002 US 413522 P
(43) Date of publication of application: 29.06.2005
(73) Proprietor: INTERDIGITAL TECHNOLOGY CORPORATION, Wilmington, DE 19810 (US)
(72) Inventor: STUFFLET, Alfred, Plymouth Meeting, PA 19462 (US); GREDONE, Joseph, W., Chalfont, PA 18914 (US); SIMEON, Richard, Spring City, PA 19475 (US)
(74) Representative: Giver, Sören Bo
(86) International application number: PCT/US2003/030332
(87) International publication number: WO 2004/030228

(56) References cited:
- US-A- 5 859 878
- US-A- 6 097 292

## Description

FIELD OF INVENTION

The present invention relates generally to wireless communication systems. More particularly, the invention relates to devices and methods for interfacing a digital communication module with an analog RF transceiver module.

BACKGROUND

Wireless communication systems generally include a digital section and an analog section. The digital section processes digital information into a format that is suited for transmission over potentially distorted channels, thereby enabling an accurate decoding of information at a remotely-situated receiver. The analog section takes the digital information and converts it into an analog signal, which is then used to modulate a carrier signal for radio-frequency (RF) transmission. One example of such a wireless communication system is known from e.g. US 5859878.

Modular communication systems have been designed wherein the digital section and analog section are furnished as separable units. The analog section is generally referred to as an analog radio module, whereas the digital section is referred to as digital control hardware or a digital module. Unfortunately, the interface between these two sections is typically defined such that the input-output (I/O) format of data and control words are not the same in both sections. This presents a significant obstacle to the seamless exchange of information between the two sections. To further exacerbate matters, it is often desirable to interface a given digital section with any of a plurality of analog sections, wherein each analog section may be designed by a separate manufacturer or have differing electrical properties. In an analogous manner, it may be desired to interface a given analog section with any of a plurality of digital sections.

Accordingly, what is needed is an improved interfacing mechanism that standardizes communications between the digital and analog sections. What is also needed is an improved mechanism which permits coupling any of a plurality of analog sections to any of a plurality of digital sections, irrespective of the specific electronic characteristics of the analog section.

SUMMARY

Through the use of a serial bus processor coupled to memory-mapped registers of a programmable radio interface processor (RIP), the radio interface of the present invention overcomes the problem of disparate interfaces between the digital section and the analog section of a wireless communications system. The serial bus processor receives data from a plurality of lookup tables which, in turn, are indexed by data received from the digital section. The serial bus processor then uses data values retrieved from the lookup tables to generate processed control data for controlling the analog module. The lookup tables are programmed with data to compensate for nonlinearities which may be present in the analog section, but are not accounted for in the digital section.

Operation of the serial bus processor is controlled by the memory-mapped registers. These registers are accessed by a finite state machine internal to the RIP, and may also be accessed via a processor interface, external to the RIP. In order to determine the precise timing of external events and also to command and control various radio operations, the RIP accepts a clock signal from a chip counter. The output of the serial bus processor provides any of several standardized bus interfaces, such as an SPI (serial-parallel interface) bus. This standardized interface, taken in conjunction with the GPIO interface, permits great flexibility in exercising command and control over the analog radio module. The flexible, programmable interface, interposed between the digital and analog sections, facilitates a merging of the two sections in a seamless manner.

High-level commands from the digital section, including gain settings, power measurements, and the like, are translated by the radio interface into low-level commands which are then sent to the analog section. This eliminates the need for generating analog-specific command sequences in the digital section, and instead transfers this burden to the radio interface. The radio interface controlling software, in turn, is modified according to the specific electronic characteristics of the connecting analog section.

The radio interface compensates for nonlinearities in the analog section through the use of look-up tables. These nonlinearities involve parameters such as AGC (automatic gain control) line voltage as a function of gain, and power level control voltage as a function of power output, such that the digital section need not be modified to work with the specific characteristics of a particular analog section; the radio interface need only be programmed accordingly.

The radio interface allows a digital device to interface with existing OEM radios without the need for redesigning the radio or the ASIC. This provides lower cost and reduced marketing time, since vendors need not modify existing radio designs to provide an adequate interface. For example, a time division duplex (TDD) UE ASIC chip is used in various digital modems, with the effect that the radio interface disclosed herein enables such digital modems to be utilized with radios such as an InterDigital radio, a Nokia radio, or any other radio. This eliminates the need to provide a layer of "glue logic" which, heretofore, was necessary in order to provide a custom interface between the radio and the modem. Such glue logic is typically different for different radios, thereby necessitating a different design for every radio that must interface to the modem. The radio interface disclosed herein provides a reconfigurable interface without the need for glue logic or re-compilation of the ASIC design.

BRIEF DESCRIPTION OF THE DRAWING(S)

A more detailed understanding of the invention may be gained from the following description of a preferred embodiment, given by way of example and to be understood in conjunction with the accompanying drawing wherein:

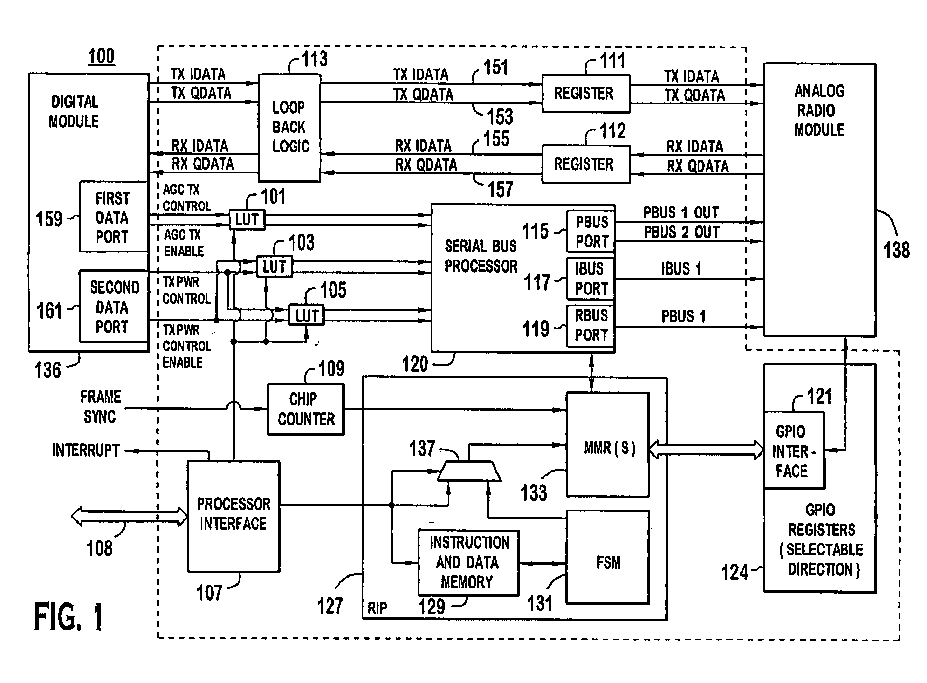

FIG. 1 is a hardware block diagram setting forth an illustrative implementation of the radio interface of the present invention.

Although the meanings of the following acronyms are well known to those skilled in the art, they are nonetheless presented herein for the convenience of the reader:
- AGC: automatic gain control
- ASIC: application specific integrated circuit
- FSM: finite state machine
- GPIO: general purpose input/output
- I/O: input/output
- LUT: lookup table
- MMR: memory mapped register(s)
- OEM: original equipment manufacturer
- RIP: radio interface processor
- SPI: serial-parallel interface
- TDD: time division duplex
- UE: user equipment
- VCI: virtual component interface

DETAILED DESCRIPTION OF THE PREFERRED EMBODIMENT(S)

Refer now to FIG. 1 in which a preferred embodiment of the radio interface 100 of the present invention is shown. The radio interface 100 is used to connect an analog radio module 138 with a digital module 136. The analog radio module 138 includes circuitry for transmitting and receiving RF signals, as well as circuitry for modulating and demodulating RF signals with data signals. The digital module 136 may, but need not, represent a digital modem.

The radio interface 100 accepts data from a first data port 159 and a second data port 161 of the digital module 136. First and second data ports 159, 161 are typically 8-bit ports that are each latched with a respective enable line. In the example of FIG. 1, the first data port 159 outputs transmitter AGC data to the radio interface, and the second data port 161 outputs transmitter power control data to the radio interface 100. The output of the first data port 159 serves as the input to a first LUT 101, and the output of the second data port 161 serves as the input to a second and a third LUT (LUT 103 and LUT 105). The LUTs 101, 103, 105 may each be 256x8 bits in size, but this is not an absolute requirement, and lookup tables of other sizes could be employed.

The LUTs 101, 103, 105 are downloaded via a processor interface 107 which may include a sixteen instruction processing unit with interrupt generation. These LUTs 101, 103, 105 are indexed via at least one of a TPC (transmitter power control) word, and an AGC (automatic gain control) word. The TPC word or AGC word is applied to the address bus of LUTs 101, 103, 105, thus providing the ability to translate the TPC or AGC word based upon the specific requirements of a particular radio model or group of radio models.

Data values accessed from the LUTs 101,103,105 are fed to a serial bus processor 120. The serial bus processor 120 controls one or more serial-parallel interface busses, which, for illustrative purposes, are shown as PBus port 115, IBus port 117, and RBus port 119 in FIG. 1. It is not necessary to furnish any or all of the three aforementioned ports as, for example, some existing radios would not be equipped to utilize IBus port 117. For many practical applications, serial-parallel interface busses in the form of PBus port 115 and RBus port 119 would be furnished. RBus port 119 and IBus port 117 are functionally identical, and may comprise serial-parallel interface (SPI) busses with additional read functionality through the use of a bi-directional data bus mechanism. The PBus port 115 is a two-wire output bus that provides very limited address functionality. The serial bus processor 120 handles the reception and transmission of data on all three bus ports (IBus port 117, RBus port 119, and PBus port 115). In operation, serial bus processor receives its data from the output of at least one LUT 101, 103,105, and directs this LUT output to any one of the three bus ports (IBus port 117, RBus port 119, and PBus port 115). Under the control of the radio interface processor (RIP) 127 (or a host processor), the output of the LUTs 101,103, 105 are held in current registers. For example, the output of LUT 101 is held in an AGC (automatic gain control) current register, the output of LUT 103 is held in a TPC1 (transmitter power control one) register, and the output of LUT 105 is held in a TPC2 (transmitter power control two) register. Control bits in the memory mapped register(s) (MMR(s)) 133 select the serial bus and the data that is provided to the serial bus (refer to the serial bus processor 120, PBus port 115, IBus port 117, and RBus port 119).

The RIP 127 includes radio interface micro-code. Radio interface software may or may not be executed on an external microcontroller via the processor interface 107 and the microprocessor bridge 108. The radio interface software is responsible for loading the micro-code into instruction and data memory 129, configuring the RIP 127, and executing hardware functions. It also communicates with other software modules to receive high-level configuration information, as well as transmitting back information gathered from the analog radio module 138.

The RIP 127 provides configuration control over the interface between analog radio module 138 and digital module 136. Through one or more MMR(s) 133, the RIP 127 controls various functionalities of the interface, such as a chip counter 109, the serial bus processor 120, GPIO registers 124, and data path control (TX IDATA 151, TX QDATA 153, RX IDATA 155, and RX QDATA 157). The RIP 127 can write to bits in an MMR(s) 133 location that enable (change) the format of TX and/or RX data. The data format may be changed to support binary or twos complement format (invert MSB). In turn, the RIP 127 may be controlled by an external processor over a microprocessor bridge 108. Microprocessor bridge 108 provides a mechanism for allowing external processors to control the RIP 127.

Operation of the serial bus processor 120 is controlled by one or more memory-mapped registers (MMR(s)) 133. The MMR(s) 133 are accessed by a finite state machine(FSM) 131 internal to the RIP 127, and may also be accessed via a processor interface, external to the RIP 127. In order to determine the precise timing of external events, and also to command and control various radio operations, the RIP 127 accepts a clock signal from a chip counter 109.

The finite state machine (FSM) 131 stores the status of a parameter at a given time and operates on received input to change this status and/or to cause an action or output to take place for any given change. Computers, microprocessors, and microcontrollers are basic examples of state machines whereby each machine instruction may be conceptualized as input that changes one or more states and may cause other actions to take place. The FSM 131 is coupled to one or more data registers (such as instruction and data memory 129 in the example of FIG. 1), wherein each of one or more registers is employed to store a state.

The FSM 131 stores an initial state of one or more parameters relating to the operation of the digital module 136, and responds to any of a plurality of sets of possible input events by defining a set of new states that result from the input. Each new state defines a set of possible actions or output events that result from the new state. The FSM 131 implements one or more functions that map a state to another state, that map input sets to output sets, and/or that map states and inputs to states (also termed a state transition function). The term "finite", as applied to the FSM 131, means that the FSM 131 has a limited (or finite) number of possible states.

Data paths TX IDATA 151, TX QDATA 153, RX IDATA 155, and RX QDATA 157 provide a fixed-width digital bus that passes values between the digital module 136 and the analog radio module 138. Two data paths per direction are provided: TX IDATA 151 and TX QDATA 153. These run from the digital module 136 to the analog radio module 138 via a register 111. Additionally, RX IDATA 155 and RX QDATA 157 run from the analog radio module 138 to the digital module 136 via a second register 112. These paths facilitate the processing of complex-valued signals, both in-phase (I) and quadrature (Q) components, for baseband processing. Loopback functionality is provided by a loop back logic module 113, which can be programmed to redirect TX IDATA 151 and TX QDATA 153 from register 111 directly back to the RX IDATA 155 and RX QDATA 157 lines of analog radio module 136. Digital loopback is commonly utilized in conjunction with many modem designs. This function provides the ability to test the data path within the chip, at the furthest circuit points prior to leaving the chip. This loopback feature is controlled by one or more MMR(s) 133.

Optionally, the format of the data on TX IDATA 151, TX QDATA 153, RX IDATA 155, and RX QDATA 157 may be changed via a selectable data format block. The data format is converted in the "register blocks" in the data path section. Control is accomplished via setting of one or more bit(s) in MMR(s) 133, which are exclusive-OR'ed (XOR'ed) with the MSB's (most significant bits) of the TX and RX data paths.

Pursuant to a further optional feature, data can be transformed from a two's complement format to an offset binary format through a control bit in MMR(s) 133. This function can be provided for all data paths including TX IDATA 151, TX QDATA 153, RX IDATA 155, and RX QDATA 157.

The GPIO registers 124 provide a plurality of communication pathways that are available as individually configurable inputs or outputs. The direction of these GPIO registers 124 may, but need not, be selectable. The selectable direction of the GPIO registers 124 allows each GPIO data bit to be set independently to an output (write) or an input (read). The direction register can be set once during operation to easily adapt to the direction of the control signals, based upon fixed (input versus output) board level configuration. The direction register can also be reconfigured dynamically to support bidirectional control signals. In operation, GPIO registers 124 are accessed by MMR(s) 133. Moreover, since GPIOs function asynchronously, the various inputs and outputs of GPIO registers 124 are valid at the time ofMMR(s) 133 access. Each GPIO data bit can provide a signal that has the same, or different, timing from other GPIO signals. Pursuant to a preferred embodiment of the invention, thirty GPIO communication pathways are provided, although this is clearly a design choice and may be varied as desired. The GPIO registers 124 provide a flexible way of connecting to a radio module bus, control line, or status line. By contrast, existing prior-art designs use a serial interface and a fixed control signal interface.

The radio interface 100 of the present invention as shown in FIG. 1 solves the problem of interchanging different analog radio modules 138 with a digital module 136 such as a digital modem. By serving as an intermediary between a digital modem and analog radio module 138, the radio interface transforms high-level commands sent by the digital modem into low-level commands which are tailored to the particular characteristics of a specific analog radio module 138, or to the particular characteristics of a set of analog radio modules 138, wherein the set may represent analog radio modules of a particular make, manufacturer, or model number. These low-level commands may differ substantially from one analog radio module 138 to another, with respect to event timing, command structure, and bus protocol, among other things.

Without a flexible radio interface, hardware specific to an analog radio module 138 or class of analog radio modules would need to be provided. Interchanging radios would require a modification of digital modem software and hardware in a decentralized fashion. By contrast, a flexible radio interface centralizes changes to one module (digital modem software), thus preserving the digital modem hardware and software (i.e. digital module 136), effectively isolating the peculiarities of various analog radio modules 138 from the relatively fixed properties of digital modems and other digital devices.

While the invention has been particularly shown and described with reference to preferred embodiments, it will be understood by those skilled in the art that various changes in form and details may be made within the scope of the appended claims. For example, the value of a given radio interface is determined, in part, by the flexibility with which it can adapt to different analog radio modules. As such, two alternate embodiments of the radio interface disclosed herein are as follows:

Pursuant to a first alternate embodiment, a dedicated high-speed microprocessor is used to implement the RIP 127, thereby eliminating the need for serial bus processor 120. By attaching multiple high-speed GPIO lines into the dedicated microprocessor, bus activity can be multiplexed such that TX IDATA 151, TX QDATA 153, RX IDATA 155, and RX QDATA 157, the inputs of LUTs 101,103, 105 and the various bus inputs and outputs (IBus port 115, PBus port 117, and RBus port 119) are accommodated via the GPIO registers 124. This approach would require a relatively high-speed microprocessor to service all GPIO lines. Also, the size of this device would be somewhat large in an embedded processor design.

Pursuant to a second alternate embodiment, the radio interface between analog radio module 138 and digital module 136 would not be flexible, in that it would not be programmable to meet the needs of any of various analog radio modules, but rather be programmed or hard-wired to meet the specific needs of a given type of analog radio module. In practice, this approach would prohibit interchanging various types of analog radio modules with the same digital modem. The primary advantages to this approach are reduced parts count and greater simplicity, since extraneous busses, control lines, and functionality can be removed. However, manufacturers could also use this approach to ensure that only certain types of analog radio modules would function properly with specific digital modems.

## Claims

1. A method for interfacing any of a plurality of analog radio modules to a digital module in a system that comprises (i) a serial bus processor (120), (ii) a programmable radio interface processor (RIP) (127) that includes one or more memory-mapped register (133) coupled to the serial bus processor, and (iii) a plurality of lookup tables, (101,103,105), the method **characterized by** the steps of:
(a) programming the plurality of lookup tables with data so as to compensate for one or more nonlinearities which may be present in one of the plurality of analog radio modules (138), but are not accounted for in the digital module;
(b) indexing the plurality of lookup tables using data received from the one digital radio module (196),
(c) the serial bus processor receiving data from the plurality of lookup tables, and
(d) the serial bus processor using data values retrieved from the lookup tables to generate processed data for controlling one of the plurality of analog radio modules wherein interfacing with another of the plurality of analog radio modules is by a software reconfiguration.

2. The method of claim 1 further including the step of using the memory mapped registers to control the processed data generated by the serial bus processor.

3. The method of claim 1 further including the steps of providing the RIP with a finite state machine equipped to access the memory-mapped registers, and using the memory-mapped registers to control the processed data generated by the serial bus processor.

4. The method of claim 3, further including the step of accessing the memory-mapped registers using a processor interface.

5. The method of claim 3 further including the step of using one or more general-purpose Input/Outpout, GPIO, registers for accessing the memory-mapped registers.

6. The method of claim 1, further including the step of using a clock, coupled to the RIP, for determining the relative timing of external events, and also for controlling the one analog radio module.

7. The method of claim 1, further including the step of providing the serial bus processor with an output port configured to provide at least one of IBus, PBus and/or RBus.

8. The method of claim 1, further including the steps of the RIP translating high-level commands received from the digital module, which specify at least one of gain settings and power measurements, into low-level commands, and sending the translated low-level commands to the analog radio module, thereby eliminating generation of analog-specific command sequences in the digital module.

9. The method of claim 1, further including the step of the RIP executing controlling software that is programmed according to one or more specific electronic characteristics of the one analog radio module.

10. The method of claim 1, wherein the nonlinearities include at least one of AGC, automatic gain control, line voltage as a function of gain, and power level control voltage as a function of power output, whereby the digital module need not be modified to work with the specific characteristics of the one analog radio module.

11. The method of claim 1, wherein the digital module is a time-division-duplex, user-equipment, application-specific-integrated-circuit, TDD UE ASIC

12. A radio interface for interfacing between any of a plurality of analog radio modules (138) and a digital module (136), the interface **characterized by** :
(a) a serial bus processor (120),
(b) a programmable radio interface processor (RIP) (127); and
(c) a plurality of lookup tables (101,103,105) indexed by data received from the digital module wherein data values retrieved from the lookup tables may he used to generate processed data for controlling one of the plurality of analog radio modules wherein the radio interface interfaces with another of the plurality of analog radio modules by a software reconfiguration of the radio interface.

13. The radio interface of claim 12 wherein the RIP includes at least one memory-mapped register (133) coupled to the serial bus processor.

14. The radio interface of claim 12, wherein the plurality of lookup tables are programmed with data so as to compensate for one or more nonlinearities which may be present in the one analog radio module, but are not accounted for in the digital module.

15. The radio interface of claim 12, wherein the serial bus processor receives data from the plurality of lookup tables, and uses data values retrieved from the lookup tables to generate processed data for controlling one of the plurality of analog radio modules

16. The radio interface of claim 13, wherein the memory-mapped registers are used to control the processed data generated by the serial bus processor.

17. The radio interface of claim 12, wherein the RIP includes a finite state machine (131) equipped to access memory-mapped registers, and wherein the memory-mapped registers are used to control the processed data generated by the serial bus processor.

18. The radio interface of claim 17 further including a processor interface (107) for accessing the memory-mapped registers.

19. The radio interface of claim 17, further including one or more general-purpose Input/Output, GPIO, registers (124) for accessing the memory-mapped registers.

20. The radio interface of claim 12 further comprising a clock, coupled to the RIP, for determining the relative timing of external events, and also for controlling the one analog radio module.

21. The radio interface of claim 12, wherein the serial bus processor includes an output port configured to provide at least one of IBus, PBus and/or RBus.

22. The radio interface of claim 12, wherein the RIP translates high-level commands received from the digital module, specifying at least one of gain settings and power measurements, into low-level commands which are sent to the one analog radio module, thereby eliminating generation of analog-specific command sequences in the digital module.

23. The radio interface of claim 12, wherein the RIP accesses controlling software that is programmed according to one or more specific electronic characteristics of the one analog radio module.

24. The radio interface of claim 12, wherein the nonlinearities include at least one of AGC, automatic gain control, line voltage as a function of gain, and power level control voltage as a function of power output, whereby the digital module need not be modified to work with the specific characteristics of the one analog radio module.

25. The radio interface of claim 12, wherein the digital module is a time-division-duplex, user-equipment, application-specific-integrated-circuit, TDD UE ASIC.

## Patentansprüche

1. Verfahren zum Koppeln eines beliebigen von mehreren analogen Funkmodulen mit einem digitalen Modul in einem System, das aufweist: (i) einen seriellen Busprozessor (120), (ii) einen programmierbaren Funkschnittstellenprozessor (RIP) (127), der ein oder mehrere mit dem seriellen Busprozessor verbundene Memory-Mapped Register (133) umfaßt, und (iii) mehrere Nachschlagtabellen (101, 103, 105), wobei das Verfahren **gekennzeichnet ist durch** die folgenden Schritte:
(a) Programmieren der mehreren Nachschlagtabellen mit Daten, um eine oder mehrere Nichtlinearitäten zu kompensieren, die in einer der mehreren analoger Funkmodule (138) vorhanden sein können, die in dem digitalen Modul aber nicht berücksichtigt werden;
(b) Indizieren der mehreren Nachschlagtabellen unter Verwendung von Daten, die von dem einen digitalen Funkmodul (136) empfangen werden,
(c) Empfangen von Daten von den mehreren Nachschlagtabellen **durch** den seriellen Busprozessor, und
(d) Verwenden der aus den Nachschlagtabellen abgerufenen Datenwerte **durch** den seriellen Busprozessor, um verarbeitete Daten zum Steuern eines der mehreren analogen Funkmodulen zu erzeugen;
wobei das Koppeln mit einem anderen der mehreren analogen Funkmodule **durch** eine Software-Umkonfiguration erfolgt.

2. Verfahren nach Anspruch 1, das ferner den Schritt der Verwendung der Memory-Mapped Register aufweist, um die von dem seriellen Busprozessor erzeugten verarbeiteten Daten zu steuern.

3. Verfahren nach Anspruch 1, welches die Schritte des Versehens des RIP mit einer endlichen Zustandsmaschine, die derart ausgestattet ist, daß sie auf die Memory-Mapped Register zugreift, und das Verwenden der Memory-Mapped Register zum Steuern der von dem seriellen Busprozessor erzeugten verarbeiteten Daten umfaßt.

4. Verfahren nach Anspruch 3, das ferner den Schritt des Zugreifens auf die Memory-Mapped Register unter Verwendung einer Prozessorschnittstelle umfaßt.

5. Verfahren nach Anspruch 3, das ferner den Schritt des Verwendens eines oder mehrerer Universal-Eingabe-/Ausgabe-, GPIO-, Register zum Zugreifen auf die Memory-Mapped Register umfaßt.

6. Verfahren nach Anspruch 1, das ferner den Schritt des Verwendens eines mit dem RIP verbundenen Taktgebers zum Bestimmen der relativen Zeitsteuerung externer Ereignisse und auch zum Steuern des einen analogen Funkmoduls umfaßt.

7. Verfahren nach Anspruch 1, das ferner den Schritt des Bereitstellens des seriellen Busprozessors mit einem Ausgangsport umfaßt, der derart konfiguriert ist, dass er einen IBus und/oder einen PBus und/oder einen RBus unterstützt.

8. Verfahren nach Anspruch 1, das ferner die durch den RIP ausgeführten Schritte umfaßt: Übersetzen von Befehlen auf hoher Ebene, die von dem digitalen Modul empfangen werden, welche die Verstärkungseinstellungen und/oder Leistungsmessungen spezifizieren, in Befehle auf niedriger Ebene, und Senden der übersetzten Befehle auf niedriger Ebene an das analoge Funkmodul, wodurch die Erzeugung analogspezifischer Befehlsfolgen in dem digitalen Modul beseitigt wird.

9. Verfahren nach Anspruch 1, das ferner den Schritt umfaßt, in dem die RIP Steuersoftware ausführt, die entsprechend einer oder mehrerer spezifischer wesentlicher elektronischer Eigenschaften des einen analogen Funkmoduls programmiert ist.

10. Verfahren nach Anspruch 1, wobei die Nichtlinearitäten eine AGC-, automatische Verstärkungssteuerungs-, Leitungsspannung als eine Funktion der Verstärkung und/oder eine Leistungspegelsteuerspannung als eine Funktion der Leistungsausgabe umfassen, wobei das digitale Modul nicht modifiziert werden braucht, um mit den spezifischen wesentlichen Eigenschaften des analogen Funkmoduls zu arbeiten.

11. Verfahren nach Anspruch 1, wobei das digitale Modul eine anwendungsspezifische integrierte Zeitteilungsduplex-Benutzergeräte-Schaltung, TDD UE ASIC, ist.

12. Funkschnittstelle zum Koppeln eines beliebigen von mehreren analogen Funkmodulen (138) mit einem digitalen Modul (136), wobei die Schnittstelle **gekennzeichnet ist durch**:
(a) einen seriellen Busprozessor (120),
(b) einen programmierbaren Funkschnittstellenprozessor (RIP) (127), und
(c) mehrere Nachschlagtabellen (101, 103, 105), die durch Daten indiziert werden, die von dem digitalen Modul empfangen werden, wobei von den Nachschlagtabellen abgerufene Datenwerte verwendet werden können, um verarbeitete Daten zum Steuern eines der mehreren analogen Funkmodule zu erzeugen, wobei die Funkschnittstelle **durch** eine Software-Umkonfiguration der Funkschnittstelle mit einem anderen der mehreren analogen Funkmodule koppelt.

13. Funkschnittstelle nach Anspruch 12, wobei der RIP zumindest ein Memory-Mapped Register (133) umfaßt, das mit dem seriellen Busprozessor verbunden ist.

14. Funkschnittstelle nach Anspruch 12, wobei die mehreren Nachschlagtabellen mit Daten programmiert sind, um eine oder mehrere Nichtlinearitäten zu kompensieren, die in dem einen analogen Funkmodul vorhanden sein können, die aber in dem digitalen Modul nicht berücksichtigt werden.

15. Funkschnittstelle nach Anspruch 12, wobei der serielle Busprozessor Daten von den mehreren Nachschlagtabellen empfängt und die aus den Nachschlagtabellen abgerufenen Datenwerte verwendet, um verarbeitete Daten zum Steuern eines der mehreren analogen Funkmodule zu erzeugen.

16. Funkschnittstelle nach Anspruch 13, wobei die Memory-Mapped Register verwendet werden, um die verarbeiteten Daten zu steuern, die von dem seriellen Busprozessor erzeugt werden.

17. Funkschnittstelle nach Anspruch 12, wobei der RIP eine endliche Zustandsmaschine (131) umfaßt, die derart ausgestattet ist, daß sie auf Memory-Mapped Register zugreift, und wobei die Memory-Mapped Register zum Steuern der von dem seriellen Busprozessor erzeugten verarbeiteten Daten verwendet werden.

18. Funkschnittstelle nach Anspruch 17, die ferner eine Prozessorschnittstelle (107) zum Zugreifen auf die Memory-Mapped Register umfaßt.

19. Funkschnittstelle nach Anspruch 17, die ferner ein oder mehrere Universal-Eingabe-/Ausgabe-, GPIO-, Register (124) zum Zugreifen auf die Memory-Mapped Register umfaßt.

20. Funkschnittstelle nach Anspruch 12, die ferner einen mit dem RIP verbundenen Taktgeber zum Bestimmen der relativen Zeitsteuerung externer Ereignisse und auch zum Steuern des einen analogen Funkmoduls umfaßt.

21. Funkschnittstelle nach Anspruch 12, wobei der serielle Busprozessors einen Ausgangsport umfaßt, der derart konfiguriert ist, daß er einen IBus und/oder einen PBus und/oder einen RBus unterstützt.

22. Funkschnittstelle nach Anspruch 12, wobei der RIP Befehle auf hoher Ebene, die von dem digitalen Modul empfangen werden, welche die Verstärkungseinstellungen und/oder Leistungsmessungen spezifizieren, in Befehle auf niedriger Ebene übersetzt, welche an das analoge Funkmodul gesendet werden, wodurch die Erzeugung analogspezifischer Befehlsfolgen in dem digitalen Modul beseitigt wird.

23. Funkschnittstelle nach Anspruch 12, wobei der RIP auf Steuersoftware zugreift, die entsprechend einer oder mehrerer spezifischer wesentlicher elektronischen Eigenschaften des einen analogen Funkmoduls programmiert ist.

24. Funkschnittstelle nach Anspruch 12, wobei die Nichtlinearitäten eine AGC-, automatische Verstärkungssteuerungs-, Leitungsspannung als eine Funktion der Verstärkung und/oder eine Leistungspegelsteuerspannung als eine Funktion der Leistungsausgabe umfassen, wobei das digitale Modul nicht modifiziert werden braucht, um mit den spezifischen wesentlichen Eigenschaften des analogen Funkmoduls zu arbeiten.

25. Funkschnittstelle nach Anspruch 12, wobei das digitale Modul eine anwendungsspezifische integrierte Zeitteilungsduplex-Benutzergeräte-Schaltung, TDD UE ASIC, ist.

## Revendications

1. Procédé d'interfaçage d'un quelconque parmi une pluralité de modules radio analogiques en un module numérique dans un système qui comprend (i) un processeur de bus en série (120), (ii) un processeur d'interface radio programmable (RIP) (127) qui comprend un ou plusieurs registre(s) de configuration de mémoire (133) raccordé au processeur de bus en série, et (iii) une pluralité de tables de conversion (101, 103, 105) ; le procédé étant **caractérisé par** les étapes consistant à :
(a) programmer la pluralité de tables de conversion avec les données de façon à compenser une ou plusieurs non-linéarité(s) qui peut(peuvent) être présente(s) dans un parmi la pluralité de modules radio analogiques (138), mais ne sont pas prises en compte dans le module numérique ;
(b) indexer la pluralité de tables de conversion en utilisant les données reçues du module radio numérique (136) ;
(c) recevoir des données par le processeur de bus en série de la pluralité de tables de conversion, et
(d) utiliser les valeurs des données récupérées par le processeur de bus en série des tables de conversion pour générer des données traitées afin de commander un de la pluralité des modules radio analogiques ;
dans lequel l'interfaçage avec un autre parmi la pluralité de modules radio analogiques est effectué par une reconfiguration de logiciel.

2. Procédé selon la revendication 1 comprenant en outre l'étape consistant à utiliser les registres de configuration de mémoire pour commander les données traitées générées par le processeur de bus en série.

3. Procédé selon la revendication 1 comprenant en outre les étapes consistant à fournir au RIP une machine à états finis équipée pour accéder aux registres de configuration de mémoire, et utiliser les registres de configuration de mémoire pour commander les données traitées générées par le processeur de bus en série.

4. Procédé selon la revendication 3 comprenant en outre l'étape consistant à accéder aux registres de configuration de mémoire en utilisant une interface de processeur.

5. Procédé selon la revendication 3 comprenant en outre l'étape consistant à utiliser un ou plusieurs registre(s) d'entrée/sortie général(aux), GPIO, pour accéder aux registres de configuration de mémoire.

6. Procédé selon la revendication 1 comprenant en outre l'étape consistant à utiliser une horloge, raccordée au RIP, pour déterminer la temporisation relative des événements externes, et également pour commander le module radio analogique.

7. Procédé selon la revendication 1, comprenant en outre l'étape consistant à fournir au processeur de bus en série un port de sortie configuré pour fournir au moins un parmi un IBus, un PBus et/ou un RBus.

8. Procédé selon la revendication 1, comprenant en outre les étapes consistant à traduire par le RIP des commandes de haut niveau reçues du module numérique, qui spécifient au moins un parmi des réglages de gain et des mesures de puissance, dans des commandes de bas niveau, et envoyer les commandes de bas niveau traduites au module radio analogique, éliminant ainsi la génération de séquences de commandes analogiques spécifiques dans le module numérique.

9. Procédé selon la revendication 1, comprenant en outre l'étape consistant à exécuter par le RIP un logiciel de commande qui est programmé en fonction d'une ou de plusieurs caractéristique(s) électronique(s) spécifique(s) du module radio analogique.

10. Procédé selon la revendication 1, dans lequel les non-linéarités comprennent au moins une parmi une tension composée AGC, commande automatique de gain en tant que fonction de gain, et une tension de commande de niveau de puissance en tant que fonction de sortie de puissance, de telle manière que le module numérique ne doive pas être modifié pour fonctionner avec les caractéristiques spécifiques du module radio analogique.

11. Procédé selon la revendication 1, dans lequel le module numérique est un circuit intégré à application spécifique d'un équipement d'utilisateur de duplexage par répartition dans le temps, TDD UE ASIC.

12. Interface radio d'interfaçage entre un quelconque parmi une pluralité de modules radio analogiques (138) et un module numérique (136), l'interface étant **caractérisée par** :
(a) un processeur de bus en série (120),
(b) un processeur d'interface radio programmable (RIP) (127) ; et
(c) une pluralité de tables de conversion (101, 103, 105) indexées par des données reçues du module numérique
dans lequel les valeurs des données récupérées des tables de conversion peuvent être utilisées pour générer les données traitées afin de commander un parmi la pluralité de modules radio analogiques ; dans lequel l'interface radio se connecte avec un autre parmi la pluralité de modules radio analogiques par une reconfiguration de logiciel de l'interface radio.

13. Interface radio selon la revendication 12, dans laquelle le RIP comprend au moins un registre de configuration de mémoire (133) raccordé au processeur de bus en série.

14. Interface radio selon la revendication 12, dans laquelle la pluralité de tables de conversion sont programmées avec les données de façon à compenser une ou plusieurs non-linéarité(s) qui peut(peuvent) être présente(s) dans le module radio analogique, mais ne sont pas prises en compte dans le module numérique.

15. Interface radio selon la revendication 12, dans laquelle le processeur de bus en série reçoit les données de la pluralité de tables de conversion, et utilise les valeurs des données récupérées des tables de conversion pour générer les données traitées afin de commander un parmi la pluralité des modules radio analogiques.

16. Interface radio selon la revendication 13, dans laquelle les registres de configuration de mémoire sont utilisés pour commander les données traitées générées par le processeur de bus en série.

17. Interface radio selon la revendication 12, dans laquelle le RIP comprend une machine à états finis (131) équipée de registres de configuration de mémoire, et dans laquelle les registres de configuration de mémoire sont utilisés pour commander les données traitées générées par le processeur de bus en série.

18. Interface radio selon la revendication 17, comprenant en outre une interface de processeur (107) pour accéder aux registres de configuration de mémoire.

19. Interface radio selon la revendication 17, comprenant en outre un ou plusieurs registre(s) d'entrée/sortie général(aux), GPIO (124), pour accéder aux registres de configuration de mémoire.

20. Interface radio selon la revendication 12 comprenant en outre une horloge, raccordée au RIP, pour déterminer la temporisation relative des événements externes, et également pour commander le module radio analogique.

21. Interface radio selon la revendication 12, dans laquelle le processeur de bus en série comprend un port de sortie configuré pour fournir au moins un parmi un IBus, un PBus et/ou un RBus.

22. Interface radio selon la revendication 12, dans laquelle le RIP traduit des commandes de haut niveau reçues du module numérique, qui spécifient au moins un parmi des réglages de gain et des mesures de puissance, dans des commandes de bas niveau qui sont envoyées au module radio analogique, éliminant ainsi la génération de séquences de commandes analogiques spécifiques dans le module numérique.

23. Interface radio selon la revendication 12, dans laquelle le RIP accède au logiciel de commande qui est programmé en fonction d'une ou de plusieurs caractéristique(s) électronique(s) spécifique(s) du module radio analogique.

24. Interface radio selon la revendication 12, dans laquelle les non-linéarités comprennent au moins une parmi une tension composée de commande automatique de gain, AGC, en tant que fonction de gain, et une tension de commande de niveau de puissance en tant que fonction de sortie de puissance, de telle manière que le module numérique ne doive pas être modifié pour fonctionner avec les caractéristiques spécifiques du module radio analogique.

25. Interface radio selon la revendication 12, dans laquelle le module numérique est un circuit intégré à application spécifique d'un équipement d'utilisateur de duplexage par répartition dans le temps, TDD UE ASIC.
